(19) Europäisches Patentamt
European Patent Office
Office européen des brevets

(11) **EP 3 524 046 B1**

(12) **EUROPEAN PATENT SPECIFICATION**

(45) Date of publication and mention
of the grant of the patent:
**07.04.2021 Bulletin 2021/14**

(51) Int Cl.:
*A01D 34/00* *(2006.01)*          *G07C 5/00* *(2006.01)*
*A01D 101/00* *(2006.01)*        *G07C 3/00* *(2006.01)*

(21) Application number: **19156009.3**

(22) Date of filing: **07.02.2019**

(54) **DEVICE FOR MEASURING THE LIFETIME OF THE BLADE OF A LAWNMOWER AND RELATED LAWNMOWER**

VORRICHTUNG ZUM MESSEN DER LEBENSDAUER DER KLINGE EINES RASENMÄHERS UND ZUGEHÖRIGER RASENMÄHER

DISPOSITIF DE MESURE DE LA DURÉE DE VIE DE LA LAME D'UNE TONDEUSE À GAZON ET TONDEUSE À GAZON ASSOCIÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.02.2018 IT 201800002514**

(43) Date of publication of application:
**14.08.2019 Bulletin 2019/33**

(73) Proprietor: **Stiga S.p.A. in breve anche St. S.p.A.**
**31033 Castelfranco Veneto (TV) (IT)**

(72) Inventors:
• **VALLONE, Varna**
  **31033 CASTELFRANCO VENETO (TV) (IT)**
• **BROVEDANI, Vittorio**
  **31025 SANTA LUCIA DI PIAVE (TV) (IT)**

(74) Representative: **Mittler, Andrea et al**
**MITTLER & C. s.r.l.**
**Viale Lombardia, 20**
**20131 Milano (IT)**

(56) References cited:
**WO-A1-2010/074646      WO-A1-2016/102145**
**CA-A1- 2 954 609**

**Description**

The present invention relates to a device for measuring the lifetime of the blade of a lawnmower and a related lawnmower.

Lawnmowers are equipped with working tools for cutting grass, e.g. blades. It is known from the background art that the blade is subject to wear, both in normal use and especially when it comes into contact with even large stones, rocks or other objects; since it is damaged and it can no longer cut the grass well, it is to be replaced.

There are devices of the prior art which detect the impacts of the blade with stones, rocks, or other objects and detect that the blade is damaged.

Patent Application WO 2016/102145 describes a robotized riding lawnmower provided with a sensor 162 configured to detect the damage of a working tool, e.g. a blade. The riding lawnmower comprises a control device 110 which is configured to detect whether the blade is damaged or lost by detecting an irregularity in the use by sensor 162. In particular, sensor 162 is configured to detect whether the blade is damaged or lost when the vibrations of blade 100 exceed a preset threshold.

In view of the prior art, it is the object of the present invention to provide a device for measuring the lifetime of the blade of a lawnmower.

According to the present invention, said object is achieved by a lifetime measuring device for a blade of a lawnmower, said device comprising at least a first sensor configured to detect the impacts of the blade with stones or other objects, at least a second sensor configured to detect the lawnmower motor rotation revolutions, and a control unit comprising first means configured to measure the intensity of the single impacts of the blade of the lawnmower in response to the detected data of the first sensor and configured to measure the rotation speed of the blade according to the detected data of the second sensor, said control unit comprising second means configured to count the blade working hours, said control unit being configured to process the lifetime of the blade as a function of the carried out measures and of said counted working hours of the blade.

By virtue of the present invention, a device for measuring the lifetime of a blade of a lawnmower which allows the state of the cutting blade of the lawnmower to always be known, even if the blade has not undergone damage from stones, etc., may be provided.

Preferably, the control unit is configured to determine the entity of the blade damage according to the amplitude of the peaks of the electrical signal from the first sensor.

Preferably, the at least a first sensor is arranged on the frame of the lawnmower and not on the blade; thereby, a simple and affordable sensor may be used.

The device for measuring the lifetime of the blade preferably comprises a high-pass filter with a cutting frequency from 700 Hz to 1500 Hz, in particular from 1000 Hz to 1500 Hz, in order to filter the electrical signal output from the at least a first sensor; thereby, the vibrational noise generated by the spark-ignition engines and of the motion transfer system are filtered.

Preferably, the control unit of the device for measuring the lifetime of the blade is configured to emit a signal indicative of the need to replace the blade when the lifetime of the blade is above a preset threshold.

The features and advantages of the present invention will become apparent from the following detailed description of a practical embodiment thereof, shown by way of non-limiting example in the accompanying drawings, in which:

figure 1 is a diagram of the device for measuring the lifetime of a blade of a lawnmower according to one embodiment of the present invention;
figure 2 is a diagram of a high-pass filter of the device in figure 1;
figure 3a is a graph of the signal output by the filter in figure 2;
figure 3b is an enlarged part of the graph in figure 3a;
figure 4 is an image of a lawnmower comprising the device in figure 1;
figure 5 is an image of the modal shape obtained by means of a finite element analysis of the blade support frame of the lawnmower in figure 4, at the resonance frequency of the frame;
figures 6 to 9 are graphs related to a calculation example of the lifetime of a blade according to the measuring device in figure 1.

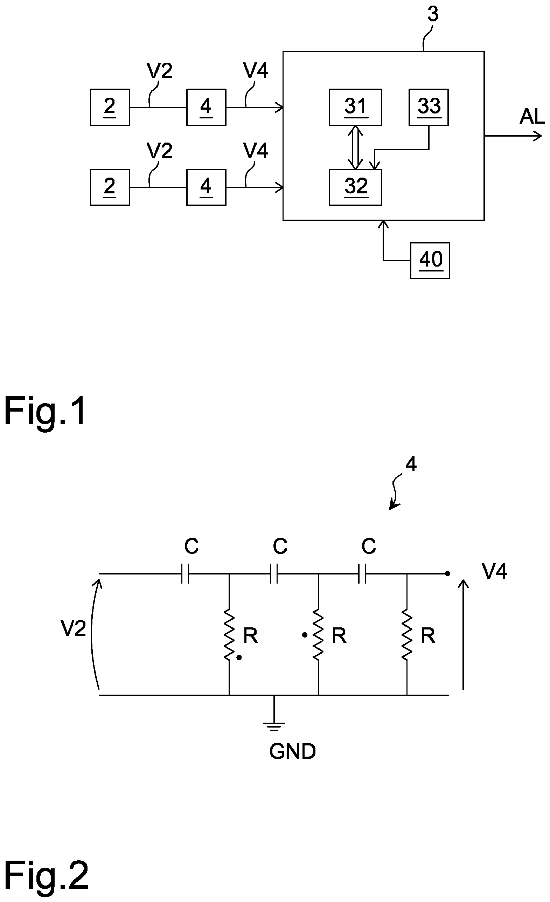

Figure 1 is a diagram of the device 1 for measuring the lifetime of a blade of a lawnmower according to one embodiment of the present invention.

Device 1 comprises at least one sensor 2, preferably arranged on the frame of the lawnmower, in particular on the blade support frame of a blade 10, and a control unit 3 with related memory 31 and related microprocessor 32. Sensor 2 is configured to detect the impacts of the blade with stones or other objects. The lawnmower may be a riding lawnmower or a push lawnmower.

Preferably, sensor 2 is a piezoelectric sensor capable of emitting an electrical signal, preferably a voltage signal V2, which is proportional to the vibrations detected by sensor 2.

The control unit 3 receives the electrical signal V2 from sensor 2 and measures the intensity of the individual impacts of the lawnmower blade with obstacles; the measures indicate the entity of the damage caused by each individual impact of the blade with an obstacle. In particular, the intensity of the individual impact or the entity of the damage is proportional to the amplitude of the peak of the electrical signal V2 at the output by the sensor 2 and the control unit, by means of a microprocessor 32 and a specific software, measure the amplitude of the peak of the electrical signal V2 at the output by the sensor 2.

The stresses above 1000 Hz are considered to measure the impacts since an impact urges all frequencies of the spectrum. There is a need to remove the vibrational noise of the spark-ignition engine and of the motion transfer system in order to assess only the impulses from the impacts of blade 10. For such a reason, it is preferable to provide a high-pass filter with cutting frequency which is calibrated for the specific application.

Device 1 preferably comprises a high-pass filter 4 arranged between the output of sensor 2 and the input of the control unit 3. The high-pass filter has a cutting frequency from 700 Hz to 1500 Hz, in particular from 1000 Hz to 1500 Hz, to filter the electrical signal V2 output from sensor 2; thereby, the noises generated by the spark-ignition engines and of the motion transfer system of the lawnmower are filtered. Device 1 preferably comprises a single high-pass filter 4 for each individual sensor 2.

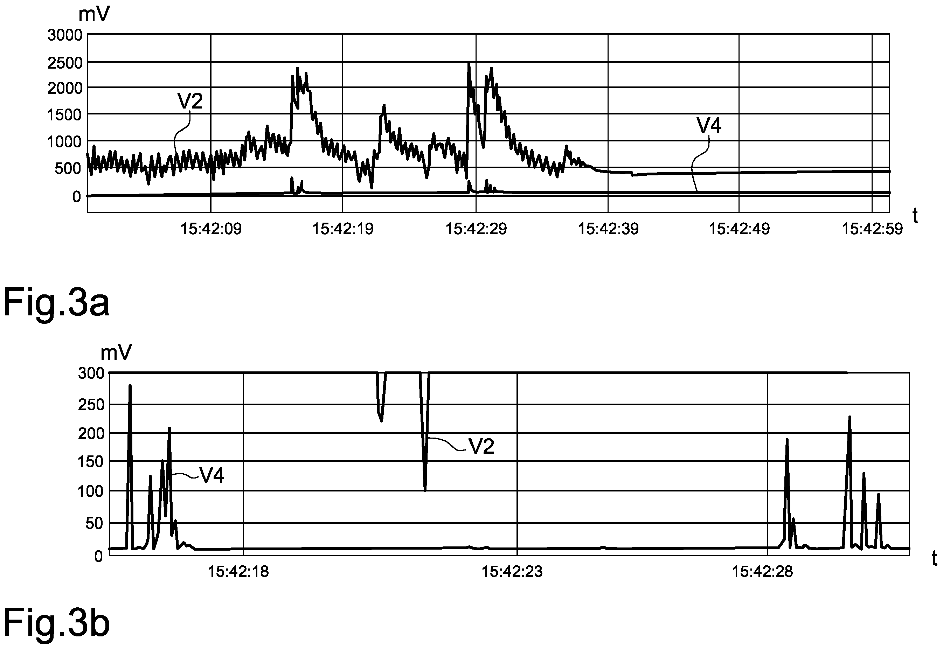

Preferably, the high-pass filter 4 is of the passive three-stage type (consisting only of passive components such as resistors and capacitors) with resistances and capacitors sized for the specific cutting frequency. The three stages of the filter allow to have a transition between pass-band and stop-band which is as close as possible to the vertical (3 stages implies a slope of - 60 dB/dec in the Bode diagram of the filter). The filter thus designed meets the specifications set by the impact recognition system with great manufacturing simplicity and affordable components. Figure 2 shows an example of a three-stage high-pass filter 4 with resistances R (for example, of 10k Ohm) and capacitors C (of for example, 12nF) configured to filter the signal V2 output by a piezoelectric sensor to obtain a filtered signal V4. Figures 3a, 3b show the signals V2 and V4 of the input and output by the high-pass filter 4.

Preferably, a finite element analysis is performed on the blade support frame of each lawnmower to determine the resonance frequency of said frames and obtain the modal shapes at the given resonance frequency, in order to determine the best position for installing the sensors 2 on the lawnmower. The modal shape indicates the higher anti-nodes, i.e. the areas of the frame which deform more, in which to arrange sensor 2.

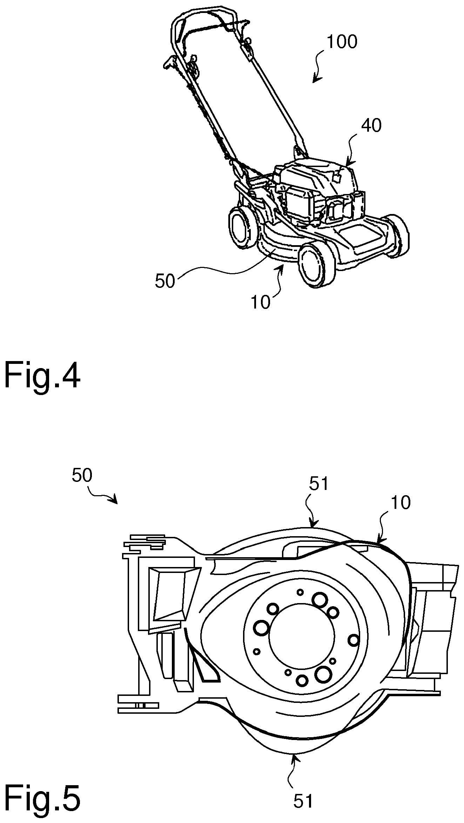

Figures 4 and 5 show a lawnmower 100 and the modal shape of the blade support frame 50 of the lawnmower. The modal shape in figure 5 relates to a resonance (or natural) frequency of the structure. It is preferable to consider an inherent vibrating mode of the structure at a frequency which is higher than the cutting frequency of the filter so as to maximize the recognition of the impacts. In particular, the sensors 2 are positioned in the points of higher anti-node, i.e. in the points subjected to the most deformation, of an inherent mode of the frame greater than 1000 Hz, which are indicated with 51 in the drawing.

The control unit 3 also comprises a counter 33 configured to count the working hours h of the blade 10 of the lawnmower; the counter is zeroed each time blade 10 is replaced, and it counts the hours only when the blade is operating.

The lawnmower also comprises a further sensor 40 configured to detect the lawnmower motor rotation revolutions; said sensor, which preferably is of inductive or Hall-effect type, is normally arranged on the motor. The rotation speed of blade 10 is obtained from the revolutions of the motor.

A software is stored and executed in the memory 31 of the control unit 3, the software being based on an algorithm which, by microprocessor 32, allows measuring the rotation speed of the blade itself (which is inversely proportional to the load processed by the blade) according to the detected data of sensor 40, measuring the individual impacts undergone by blade 10 and the amplitude thereof according to the detected data of the at least one sensor 2 (i.e. according to the amplitude of the peak of signal V2, V4 at the output by the sensor 2), and processing the lifetime of the blade to be processed according to all the aforesaid measures and the working hours of blade 10 counted by counter 33.

In particular, for each impact of the blade, the control unit 3 establishes a specific lost lifetime factor U which is proportional to the measure of the impact of the blade and which is preferably measured in hours.

The algorithm considers the entity of each impact, if multiple impacts occur and the lifetime for each blade is calculated, in the case of apparatuses with several blades. Microprocessor 32 calculates the lifetime of the j-th blade by means of the following formula:

$$L_{eqj} = \left( \sum_{i=1}^{n} Uji + \sum_{k=1}^{p} (\alpha_k * \Delta t) \right)$$

where

n = total number of impacts recorded
p = total number of time periods $\Delta t$
$U_{ji}$ = lost life factor upon the i-th impact of the j-th blade
$L_{eqj}$ = lifetime of the j-th blade

In particular:

- $U_{ji}$ is given by $A_{ji\_peak}*c$ where $A_{ji\_peak}$ is the intensity of the i-th impact of the j-th blade, i.e. the amplitude of the peak of signal V2 detected by sensor 2 or of signal V4 in relation to the i-th impact of the j-th blade, and c is a constant from 1 to 15 h/V depending on the maximum lifetime of the blade, i.e. the lifetime of the blade without impacts, and on the number of maximum intensity impacts which the blade may support; moreover, constant c serves to convert the volts recorded into hours of equivalent lifetime. For example, c=5 if the intensity of the maximum impact is 4 V, the maximum lifetime of the blade is 200 h and the blade may support a maximum of 10 impacts. In particular, c= $L_{max}/(A_{impact\_max}*n_{max\_impacts})$=200 h/(4 V*10)=5h/V where $L_{max}$ is the maximum lifetime of the blade, $n_{max\_mpacts}$ is the number of maximum intensity impacts which the blade can support, $A_{impasct\_max}$ is the maximum intensity of the impacts which blade 10 may support.
- $\alpha_k$ is an adimensional damage factor at the time k-th, which depends on the cutting condition. It is given by d*[$rpm_0$-rp-$m_{cut}$] where
- d = 1/rpm= from 1/10 to 1/200 and it is a constant depending on the type of the blade and the type of the lawnmower
  rpmo = motor revolutions with the blade that is engaged but turns empty, without cutting the grass
  $rpm_{cut}$= motor revolutions during grass cutting

The control unit 3 compares the blade lifetime calculated with the blade maximum lifetime $L_{max}$ of 100 hours, for example. When the blade lifetime calculated reaches said specific value $L_{max}$, the control unit 3 emits an alarm signal AL, such as a lamp on the dashboard of the lawnmower turning on, to warn the operator that the blade is to be replaced.
By way of calculation example, a table is shown summarizing the significant events of a log of data measured with the sampling period of 1 second. The table only shows the times that a change occurs with respect to the preceding time. The data log starts at 10:10:00 and ends at 10:23:00. The data log is divided into two parts; in the first part, the grass is cut without the occurrence of impacts by the blade with obstacles, and impacts instead are recorded in the second part.
It is worth noting that the idling motor revolutions $rpm_0$, i.e. the motor revolutions when blade 10 is engaged but turns empty without cutting the grass, are $rpm_0$=2850.
d=0.02 1/rpm is given of the type of machine and blade.
Considering $L_{max}$=100 h, the maximum amplitude of the impact which blade 10 may support $A_{impact\_max}$=5 V and the maximum number of impacts which blade 10 may support $n_{max\_impacts}$=20, the results is:

$$c= L_{max} /(A_{impact\_max}*n_{max\_impacts})=100 \text{ h}/(5 \text{ V}*20)=1 \text{ h/V} => c=1 \text{ h/V (or}$$

$$c=3600 \text{ s/V)}$$

Here, $\Delta t$= 1 s, therefore converted into hours $\Delta t$ = 0.000277778 h because c and $\Delta t$ are to be concordant, i.e. both expressed in hours or seconds. For simplicity of comprehension, hours are preferred.
The lifetime of the blade Leq = A*c + ($rpm_0$ - rpm)*d * $\Delta t$ is calculated every second and this measure is added to Leq of the previous time. Iterating the method, the value of Leq at the n-th time becomes the cumulative/sum of all the Leq calculated at the individual sampling time.

| Time | rpm | A [V] | Leq [h] | Event |
|------|-----|-------|---------|-------|
| 10:10:00 | 2850 | 0 | 0 | Blade engaged, blade turning without a load. The blade is new. |
| 10:10:52 | 2800 | 0 | 0.0003 | Cutting starts with sparse grass |
| 10:18:10 | 2700 | 0 | 0.1225 | Cutting starts with thicker grass |
| | | | | |
| 10:20:36 | 2700 | 3 | 3.2442 | Impact of average entity on the blade |
| 10:21:33 | 2800 | 0 | 3.2911 | Cutting starts with sparse grass |

(continued)

| Time | rpm | A [V] | Leq [h] | Event |
|------|-----|-------|---------|-------|
| 10:22:13 | 2800 | 5 | 8.3022 | Impact of serious entity on the blade |
| 10:23:00 | 0 | 0 | 8.3308 | End of cutting |

Considering the general formula, the lifetime of the j-th blade at the n-th time, therefore after n samples acquired with period $\Delta t$, is $L_{eq\,j}\,(n\Delta t) = \left( \sum_{i=1}^{n} A_{ji} * c + \sum_{k=1}^{n}(d[rpm_0 - rpm_k] * \Delta t) \right).$

Leq is a measure of the lifetime used by the blade and therefore an index of the quality of the sharpening state thereof. The damage and use are added to each measure, thus resulting in an iterative model of the type: $Leq(k\Delta t) = Leq_k = Leq + Leq_{k-1}$.

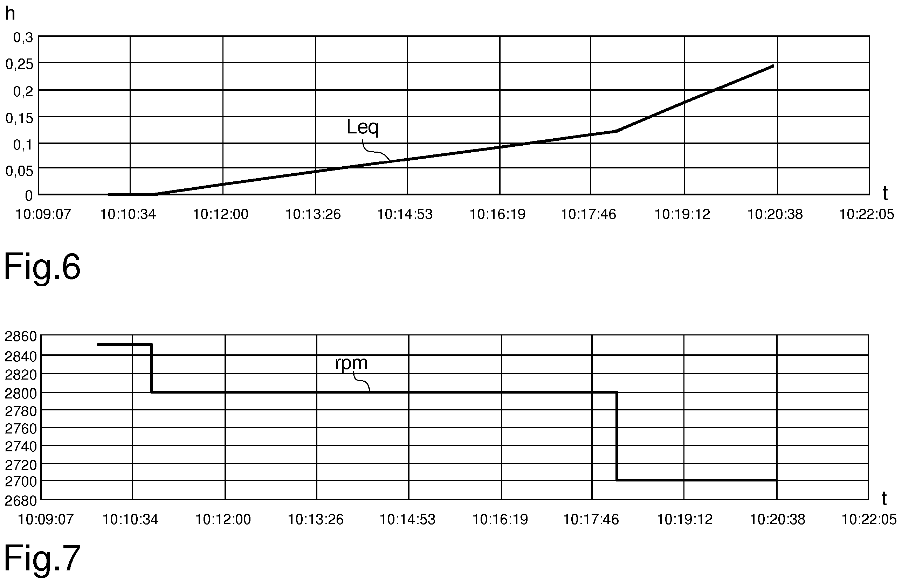

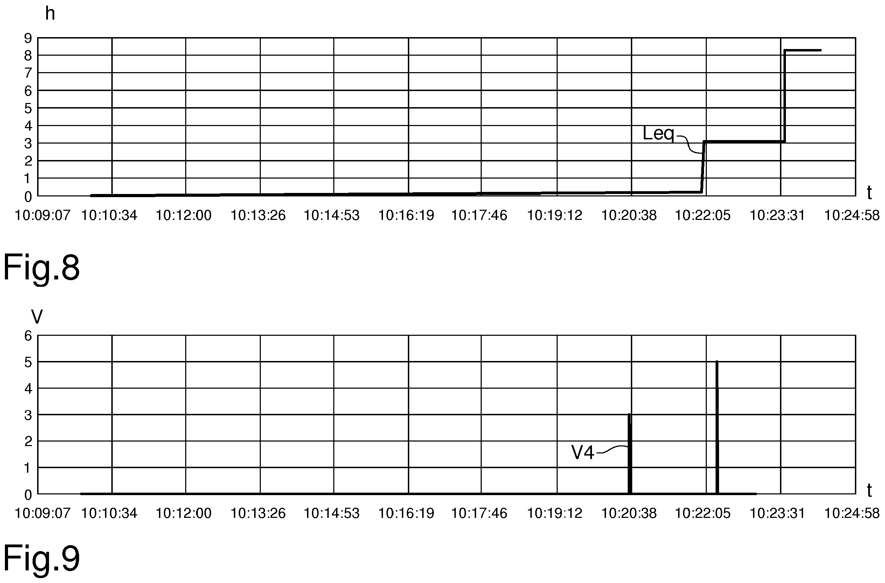

The graphs in figures 6 to 7 related to the first part of the table show how the slope of the lifetime Leq increases as the motor revolutions decrease during the grass cutting, i.e. as the grass load increases. Thicker grass uses more lifetime of the blade. The graphs in figures 8 to 9 related the second part of the table note how the hours of blade lifetime are used when there is an impact with stones of various sizes, and therefore different amplitude measured in volts of the peak of the signal V4.

**Claims**

1. Lifetime measuring device for a blade (10) of a lawnmower, said device comprising at least one first sensor (2) configured to detect the impacts of the blade with stones or other objects, at least one second sensor (40) configured to detect the lawnmower motor rotation revolutions and a control unit (3) comprising first means (31, 32) configured to measure the intensity of the single impacts of the blade of the lawnmower in response to the detected data of the first sensor and configured to measure the rotation speed of the blade in response to the detected data of the second sensor, said control unit comprising second means (33) configured to count the blade working hours, said control unit being configured to process the lifetime of the blade as a function of the carried out measures and of said counted working hours of the blade.

2. Device according to claim 1, **characterized in that** the lifetime of the j-th blade of the lawnmower is processed according to the following formula

$$L_{eq\,j} = \left( \sum_{i=1}^{n} Uji + \sum_{k=1}^{p}(\alpha_k * \Delta t) \right)$$

wherein:

n = total number of the impacts;
p = total number of time periods $\Delta t$;
$L_{eq\,j}$ = lifetime of the j-th blade;
- $\alpha_k$ = damage adimensional factor at the time k-th, which depends on the cutting condition;
$U_{ji}$ = lost life factor in relation to the i-th impacth of the j-th blade which is given by $A_{ji\_peak}*c$ wherein $A_{ji\_peak}$ is the intensity of the i-th impact of the j-th blade and c is a constant depending on the maximum lifetime of the blade and on the number of maximum intensity impacts which the blade may support.

3. Device according to claim 2, **characterized in that** the constant c is given by $c = L_{max}/(A_{impact\_max}*n_{max\_impacts})$ wherein $L_{max}$ is the maximum lifetime of the blade, $n_{max\_impacts}$ is the number of maximum intensity impacts which the blade can support, $A_{impact\_max}$ is the maximum intensity of the impact that the blade may support.

4. Device according to claim 2, **characterized in that** the damage adimensional factor at the time k-th $\alpha_k$ is given by $d*[rpm_0-rpm_{cut}]$ wherein:

d = 1/rpm= goes from 1/10 to 1/200 and it is a constant depending on the type of the blade and the type of the lawnmower;
$rpm_0$ = motor revolutions with blade that is engaged and turns empty;

rpm$_{cut}$= motor revolutions during the grass cutting at the k-th time.

5. Device according to any one of the preceding claims, **characterized by** comprising at least one high-pass filter (4) configured to filter the data (V2) detected by said at least one first sensor (2) and configured to output a filtered data signal (V4) at the input to said first means.

6. Device according to any one of the preceding claims, **characterized in that** each single intensity measure of the impact of the blade with stones or other objects depends on the amplitude of the peak of the signal (V2, V4) of the data deriving from the at least one first sensor or the filtered data signal.

7. Device according to claim 1, **characterized in that** said at least one first sensor is a piezoelectric sensor.

8. Device according to claim 1, **characterized in that** said control unit (3) is configured to emit an alarm signal (AL) if the measured lifetime of the blade (Leq) reaches the maximum lifetime of the blade.

9. Lawnmower comprising at least one blade **characterized by** comprising a lifetime measuring device for the at least one blade (10) of the lawnmower as defined in any one of the preceding claims.

10. Lawnmower according to claim 9, **characterized in that** said at least one first sensor is arranged on the higher anti-node of the modal shape of the blade support frame (50) of the lawnmower.

**Patentansprüche**

1. Lebensdauermessvorrichtung für ein Messer (10) eines Rasenmähers, wobei die Vorrichtung Folgendes aufweist: mindestens einen ersten Sensor (2), der zum Erfassen der Stöße des Messers gegen Steine oder andere Objekte ausgebildet ist, mindestens einen zweiten Sensor (40), der zum Erfassen der Umdrehungen des Rasenmähermotors ausgebildet ist, und eine Steuereinheit (3) mit einer ersten Einrichtung (31, 32), die dazu ausgebildet ist, die Intensität der einzelnen Stöße des Messers des Rasenmähers in Reaktion auf die erfassten Daten des ersten Sensors zu messen, und dazu ausgebildet ist, die Rotationsgeschwindigkeit des Messers in Reaktion auf die erfassten Daten des zweiten Sensors zu messen, wobei die Steuereinheit eine zweite Einrichtung (33) aufweist, die dazu ausgebildet ist, die Messerarbeitsstunden zu zählen, wobei die Steuereinheit dazu ausgebildet ist, die Lebensdauer des Messers in Abhängigkeit von den durchgeführten Messungen und den gezählten Arbeitsstunden des Messers zu verarbeiten.

2. Vorrichtung nach Anspruch 1,
**dadurch gekennzeichnet, dass** die Lebensdauer des j-ten Messers des Rasenmähers gemäß der nachfolgenden Formel

$$L_{eq\,j} = \left( \sum_{i=1}^{n} Uji \ + \sum_{k=1}^{p} (\alpha_k * \Delta t) \right)$$

verarbeitet wird; dabei sind:

n = die Gesamtzahl der Stöße;
p = die Gesamtzahl der Zeiträume $\Delta t$;
$L_{eq\,j}$ = die Lebensdauer des j-ten Messers;
- $\alpha_k$ = ein dimensionsloser Schadensfaktor zu dem Zeitpunkt k-th, der von den Schneidbedingungen abhängig ist;
$U_{ji}$ = ein Faktor der verlorenen Lebensdauer in Relation zu dem i-ten Stoß des j-ten Messers, der durch $A_{ji\_peak}*c$ gegeben ist, wobei $A_{ji\_peak}$ die Intensität des i-ten Stoßes des j-ten Messers ist und c eine Konstante in Abhängigkeit von der maximalen Lebensdauer des Messers sowie von der Anzahl der Stöße mit maximaler Intensität, die das Messer aushalten kann.

3. Vorrichtung nach Anspruch 2,
**dadurch gekennzeichnet,**
**dass** die Konstante c gegeben ist durch c= $L_{max}/(A_{impact\_max}*n_{max\_impacts})$, wobei $L_{max}$ die maximale Lebensdauer des Messers ist, $n_{max\_impacts}$ die Anzahl der Stöße mit maximaler Intensität ist, die das Messer aushalten kann, $A_{impact\_max}$ die maximale Intensität des Stoßes ist, die das Messer aushalten kann.

**4.** Vorrichtung nach Anspruch 2,
**dadurch gekennzeichnet, dass** der dimensionslose Schadensfaktor zu dem Zeitpunkt k-th $\alpha_k$ gegeben ist durch d*[min$^{-1}_0$-min$^{-1}_{cut}$]; dabei sind:
d = 1/min$^{-1}$ = geht von 1/10 bis 1/200 und ist eine Konstante, die von dem Typ des Messers und von dem Typ des Rasenmähers abhängig ist;
min$^{-1}_0$ = Motorumdrehungen bei aktiviertem und leer drehendem Messer;
min$^{-1}_{cut}$ = Motorumdrehungen während des Grasschneidens zum k-ten Zeitpunkt.

**5.** Vorrichtung nach einem der vorhergehenden Ansprüche,
**dadurch gekennzeichnet, dass** sie mindestens ein Hochpassfilter (4) aufweist, das zum Filtern der von dem mindestens einen ersten Sensor (2) erfassten Daten (V2) ausgebildet ist und zum Abgeben eines gefilterten Datensignals (V4) an dem Eingang zu der ersten Einrichtung ausgebildet ist.

**6.** Vorrichtung nach einem der vorhergehenden Ansprüche,
**dadurch gekennzeichnet, dass** jedes einzelne Intensitätsmaß des Stoßens des Messers gegen Steine oder andere Objekte von der Amplitude der Spitze des Signals (V2, V4) der Daten abhängig ist, die von dem mindestens einen ersten Sensor oder dem gefilterten Datensignal abgeleitet werden.

**7.** Vorrichtung nach Anspruch 1,
**dadurch gekennzeichnet, dass** der mindestens eine erste Sensor ein piezoelektrischer Sensor ist.

**8.** Vorrichtung nach Anspruch 1,
**dadurch gekennzeichnet, dass** die Steuereinheit (3) dazu ausgebildet ist, ein Alarmsignal (AL) abzugeben, wenn die gemessene Lebensdauer des Messers (Leq) die maximale Lebensdauer des Messers erreicht.

**9.** Rasenmäher mit mindestens einem Messer,
**dadurch gekennzeichnet, dass** er eine Lebensdauermessvorrichtung für das mindestens eine Messer (10) des Rasenmähers gemäß einem der vorhergehenden Ansprüche aufweist.

**10.** Rasenmäher nach Anspruch 9,
**dadurch gekennzeichnet, dass** der mindestens eine erste Sensor auf dem höheren Anti-Knoten der Modalform des Messerabstützrahmens (50) des Rasenmähers angeordnet ist.

## Revendications

**1.** Dispositif de mesure de la durée de vie d'une lame (10) de tondeuse à gazon, ledit dispositif comprenant au moins un premier capteur (2) configuré pour détecter les impacts de la lame avec des pierres ou d'autres objets, au moins un second capteur (40) configuré pour détecter le nombre de tours de rotation du moteur de la tondeuse à gazon et une unité de commande (3) comprenant
des premiers moyens (31, 32) configurés pour mesurer l'intensité des impacts uniques de la lame de la tondeuse à gazon en réponse aux données détectées du premier capteur et configurés pour mesurer la vitesse de rotation de la lame en réponse aux données détectées du second capteur, ladite unité de commande comprenant des seconds moyens (33) configurés pour compter les heures de fonctionnement de la lame, ladite unité de commande étant configurée pour traiter la durée de vie de la lame en fonction des mesures effectuées et desdites heures de fonctionnement comptées de la lame.

**2.** Dispositif selon la revendication 1, **caractérisé en ce que** la durée de vie de la j$^{ième}$ lame de la tondeuse à gazon est traitée selon la formule suivante

$$L_{eqj} = \left( \sum_{i=1}^{n} Uji + \sum_{k=1}^{p} (\alpha_k * \Delta t) \right)$$

où:

n = nombre total d'impacts ;
p = nombre total de périodes de temps $\Delta t$ ;

$L_{eq\,j}$ = durée de vie de la $j^{ième}$ lame ;

- $\alpha_k$ = facteur de dommage adimensionnel au $k^{ième}$ moment, qui dépend de la condition de coupe ;

$U_{ji}$ = facteur de fin de vie en lien avec le $i^{ième}$ impact de la $j^{ième}$ lame qui est donné par $A_{ji\_peak}{}^*c$, où $A_{ji\_peak}$ correspond à l'intensité du $i^{ième}$ impact de la $j^{ième}$ lame et c est une constante qui dépend de la durée de vie maximale de la lame et du nombre d'impacts d'une intensité maximale que la lame peut supporter.

3. Dispositif selon la revendication 2, **caractérisé en ce que** la constance c est donnée par $c=L_{max}/(A_{impact\_max}{}^*n_{max\text{-}impacts})$, où $L_{max}$ correspond à la durée de vie maximale de la lame, $n_{max\_impacts}$ correspond au nombre d'impacts d'une intensité maximale que la lame peut supporter, $A_{impact\_max}$ correspond à l'intensité maximale de l'impact que la lame peut supporter.

4. Dispositif selon la revendication 2, **caractérisé en ce que** le facteur de dommage adimensionnel au $k^{ième}$ moment $\alpha_k$ est donné par $d^*[rpm_0\text{-}rpm_{cut}]$, où :

d = 1/rpm passe de 1/10 à 1/200 et est une constante qui dépend du type de lame et du type de tondeuse à gazon ;

$rpm_0$ = nombre de tours du moteur avec la lame qui est engagée et qui tourne à vide ;

$rpm_{cut}$ = nombre de tours du moteur pendant la coupe du gazon au $k^{ième}$ moment.

5. Dispositif selon l'une quelconque des revendications précédentes, **caractérisé en ce qu'**il comprend au moins un filtre passe-haut (4) configuré pour filtrer les données (V2) détectées par ledit au moins un premier capteur (2) et configuré pour délivrer un signal de données filtré (V4) au niveau de l'entrée desdits premiers moyens.

6. Dispositif selon l'une quelconque des revendications précédentes, **caractérisé en ce que** chaque mesure d'intensité unique de l'impact de la lame avec des pierres ou d'autres objets dépend de l'amplitude de la crête du signal (V2, V4) des données dérivées du au moins un premier capteur ou du signal de données filtré.

7. Dispositif selon la revendication 1, **caractérisé en ce que** ledit au moins un premier capteur est un capteur piézoélectrique.

8. Dispositif selon la revendication 1, **caractérisé en ce que** ladite unité de commande (3) est configurée pour émettre un signal d'alarme (AL) si la durée de vie mesurée de la lame (Leq) atteint la durée de vie maximale de la lame.

9. Tondeuse à gazon comprenant au moins une lame **caractérisée en ce qu'**elle comprend un dispositif de mesure de durée de vie pour la au moins une lame (10) de la tondeuse à gazon selon l'une quelconque des revendications précédentes.

10. Tondeuse à gazon selon la revendication 9, **caractérisée en ce que** ledit au moins premier capteur est prévu sur la surface ventrale supérieure de la forme modale du cadre de support de lame (50) de la tondeuse à gazon.

Fig.1

Fig.2

**Fig.3a**

**Fig.3b**

EP 3 524 046 B1

Fig.4

Fig.5

Fig.6

Fig.7

h

**Fig.8**

V

**Fig.9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016102145 A